(19) Europäisches Patentamt
European Patent Office
Office européen des brevets

(11) **EP 2 919 093 A1**

(12) **EUROPEAN PATENT APPLICATION**
published in accordance with Art. 153(4) EPC

(43) Date of publication:
**16.09.2015 Bulletin 2015/38**

(51) Int Cl.:
***G06F 3/01*** *(2006.01)*

(21) Application number: **13804735.2**

(86) International application number:
**PCT/CN2013/080661**

(22) Date of filing: **01.08.2013**

(87) International publication number:
**WO 2013/185714 (19.12.2013 Gazette 2013/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.11.2012 CN 201210438517**

(71) Applicant: ZTE Corporation
**Shenzhen, Guangdong 518057 (CN)**

(72) Inventors:
• **QIAN, Yuming**
**Shenzhen**
**Guangdong 518057 (CN)**
• **TU, Yaofeng**
**Shenzhen**
**Guangdong 518057 (CN)**

(74) Representative: **Benson, Christopher**
**HGF Limited**
**4th Floor, Merchant Exchange**
**17-19 Whitworth Street West**
**Manchester M1 5WG (GB)**

(54) **METHOD, SYSTEM, AND COMPUTER FOR IDENTIFYING OBJECT IN AUGMENTED REALITY**

(57) A method, a system, and a computer for identifying an object in augmented reality, the identification method includes: a computer receiving a user's left eye pupil position and right eye pupil position input by an input device, computing spatial coordinates of a visual focus of eyes according to the left eye pupil position and the right eye pupil position; the computer receiving spatial coordinates of each virtual object input by the input device, and comparing the spatial coordinates of each virtual object with the spatial coordinates of the visual focus of eyes to determine a virtual object to be operated by the user.

FIG. 2

**Description**

Technical Field

The present invention relates to an augmented reality technology, and more particularly, to a method, a system and a computer for identifying an object in augmented reality.

Background of the Related Art

Augmented Reality (referred to as AR), also known as mixed reality, applies virtual information to the real world by using the computer technology, so that the real environment and virtual objects are superimposed onto the same image or exist in the same space in real time.
The augmented reality technology can be applied to the following fields:

medical field: doctors can use the augmented reality technology to easily and precisely position a surgical site; military field: troops can use the augmented reality technology to identify the orientation, access to important military data such as geographic data of the current location; historic restoration and digitization of cultural heritage protection: information of cultural monuments is provided to visitors in the form of augmented reality, and users can see not only text narration of monuments through the HMD, but also virtual reconstruction of missing parts of a historic site; industrial maintenance field: a helmet display is used to display a variety of supplementary information, including virtual instrument panel, internal structure of the device to be maintained, and schematic drawings of components in the device to be maintained, to the user; network video communication field: the system uses the augmented reality and face tracking technologies to real-time superimpose virtual objects such as hat and glasses on the caller's face during the call, to greatly improve the interest of a video conversation; television field: the augmented reality technology can be used to superimpose the supplementary information on the image in real time when broadcasting the sports game, so that the audience can obtain more information; entertainment and gaming field: the augmented reality game allows players located at different locations worldwide enter into a real natural scene together and play the game online in the form of virtual avatars; tourism and exhibition field: at the same time of browsing and visiting, people can receive relevant information of the buildings on the way and view related data of exhibits through the augmented reality technology; municipal construction planning: the augmented reality technology can be used to superimpose the planning effect on the real scene to directly obtain the planning effect.

The principle of augmented reality display technology is basically superimposing the real scene images saw by the left and right eyes to generate a virtual image. There are already products such as helmet display in the market. Google glasses are also a similar product, but because the virtual information therein is superimposed on a single eye, the three-dimensional virtual scene cannot be achieved.
With regard to the technology of displaying objects and images in a virtual 3D space, it is relatively mature in the related art, but there are still some obstacles in the interactive technology. Specifically, the computer cannot easily learn in which object in the 3D space the user is interested, and which object or virtual object the user wants to manipulate. In this regard, there are mainly the following related technologies:

the helmet is equipped with sensors to achieve the location and orientation positioning of the helmet in the 3D space;

tracking the eye actions through external sensors to determine the view direction, but because the space is 3D, the method is not able to locate the depth of field of the object;

determining the position of the object to be operated through the gesture recognition mode, which also lacks the depth of field information. If there are objects with different depths of field locating at the same orientation, the objects cannot be correctly distinguished.

Binocular vision is basically capturing objects through two cameras with parallel shafts, then the well-known depth recovery and three-dimensional reconstruction method (Ramesh Jain, Rangachar Kasturi, Brain G Schunck, Machine Version, McGraw Hill, 1995) in the prior art is used for the three-dimensional reconstruction.

Summary of the Invention

The embodiment of the present invention provides a method, a system and a computer for identifying an object in augmented reality to solve the problem of how to identify a concerned object of a user in a three-dimensional space and interact with the concerned object of the user.

The embodiment of the present invention provides a method for identifying an object in augmented reality, the method comprises:

a computer receiving a left eye pupil position and a right eye pupil position of a user input by an input device, calculating spatial coordinates of a visual focus of the eyes according to the left eye pupil position and the right eye pupil position;

the computer receiving spatial coordinates of each virtual object input by the input device, and comparing the spatial coordinates of each virtual object with the spatial coordinates of the visual focus of eyes to determine a virtual object to be operated by the user.

Preferably, after the computer determines the virtual object to be operated by the user, the method further comprises:

the computer receiving action information input by the input device, and performing an operation corresponding to the action information on an object to be operated according to the action information and a pre-stored one-to-one mapping relationship between actions and operations; wherein the object to be operated comprise a virtual object to be operated by the user.

Preferably, the pre-stored one-to-one mapping relationship between actions and operations comprises one or any combination of the following corresponding relationships:

Lines of sight of the eyes sliding corresponds to changing a current input focus;

the left eye closing and the line of sight of the right eye sliding correspond to a dragging operation;

the left eye closing and the right eye blinking correspond to a clicking operation;

the right eye closing and the line of sight of the left eye sliding correspond to a zooming in or out operation;

the right eye closing and the left eye blinking correspond to a right-clicking operation;

the eyes blinking rapidly and successively corresponds to an operation of popping-up a menu;

one eye gazing at an object for more than 2 seconds corresponds to a long-pressing operation;

the eyes gazing at an object for more than 2 seconds corresponds to a deleting operation; and

the eyes closing for more than 2 seconds corresponds to an operation of closing the menu.

Preferably, before the computer performs the corresponding operation on the object to be operated, the method further comprises:

the computer receiving parallax images input by the input device, modeling an outside world, determining there is a real object at the visual focus of the eyes, identifying attributes of the real object; wherein the object to be operated comprises the real object whose attributes are identified.

Preferably, the input device is one or more of the following devices: an eyeball detecting device, a handheld device, a voice inputting device, a camera and a virtual model system.

Preferably, the computer calculating the spatial coordinates of the visual focus of eyes according to the left eye pupil position and the right eye pupil position, comprises:

the computer obtaining relative coordinates of the left eye pupil and relative coordinates of the right eye pupil according to the left eye pupil position and the right eye pupil position, and calculating the spatial coordinates of the visual focus of eyes according to the relative coordinates of the left eye pupil and the relative coordinates of the right eye pupil.

The embodiment of the present invention further provides a computer applied to augmented reality, and the computer comprises an image identification module, an image analysis module, a depth of field recovery calculation module and an object matching module, wherein:

the image identification module is configured to: respectively receive a left eye pupil position and a right eye pupil position of a user input by an input device, and output the left eye pupil position and the right eye pupil position of the user to the image analysis module;

the image analysis module is configured to: respectively obtain corresponding relative coordinates of the left eye pupil and relative coordinates of the right eye pupil according to the left eye pupil position and the right eye pupil position, and output the relative coordinates of the left eye pupil and relative coordinates of the right eye pupil to the depth of field recovery calculation module;

the depth of field recovery calculation module is configured to: calculate spatial coordinates of a visual focus of eyes in accordance with the relative coordinates of the left eye pupil and the relative coordinates of the right eye pupil, and output the spatial coordinates of the visual focus of eyes to the object matching module; and

the object-matching module is configured to: receive spatial coordinates of each virtual object input by the input device and compare the spatial coordinates of each virtual object with the spatial coordinates of the visual focus of eyes to determine a virtual object to be operated by the user.

Preferably, the computer further comprises:

an object manipulation command output module, configured to: receive action information input by the input device, output a corresponding manipulation command to the virtual object to be operated determined by the object matching module according to the action information and a pre-stored one-to-one mapping relationship between actions and operations.

Preferably, the pre-stored one-to-one mapping relationship between actions and operations comprises one or any combination of the following corresponding relationships:

lines of sight of the eyes sliding corresponds to changing a current input focus;

the left eye closing and the line of sight of the right eye sliding correspond to a dragging operation;

the left eye closing and the right eye blinking correspond to a clicking operation;

the right eye closing and the line of sight of the left eye sliding correspond to a zooming in or out operation;

the right eye closing and the left eye blinking correspond to a right-clicking operation;

the eyes blinking rapidly and successively corresponds to an operation of popping-up a menu;

one eye gazing at an object for more than 2 seconds corresponds to a long-pressing operation;

the eyes gazing at an object for more than 2 seconds corresponds to a deleting operation; and

the eyes closing for more than 2 seconds corresponds to an operation of closing the menu.

Preferably, the depth of field recovery calculation module is further configured to: receive parallax images input by the input device, model an outside world, and judge whether there is a real object at the visual focus of eyes;
the image identification module is further configured to: after the depth of field recovery calculation module determines that there is a real object at the visual focus of eyes, identify attributes of the real object determined by the depth of field recovery calculation module.

Preferably, the object manipulation command output module is further configured to: receive action information input by the input device, and output a corresponding manipulation command to the real object whose attributes are identified by the image identification module according to the action information and the pre-stored one-to-one mapping relationship between actions and operations.

The embodiment of the present invention further provides a system for identifying an object in augmented reality, and the system comprises an input device and a computer, wherein:

the input device is configured to: provide input information to the computer, the input information comprises a left eye pupil position and a right eye pupil position of a user, as well as spatial coordinates of each virtual object;

the computer is the abovementioned computer.

Preferably, the input information further comprises eye action information and/or parallax images obtained by the input device; or voice information and/or parallax images provided by the input device; or, key information and/or parallax images provided by the input device.

Preferably, the input device is one or more of the following devices: an eyeball detecting device, a handheld device, a voice inputting device, a camera and a virtual model system.

The embodiment of the present invention achieves a three-dimensional line of sight modeling by detecting positions of the eye pupils, superimposes and matches the three-dimensional line of sight with the three-dimensional space, solves the problem of how to identify a concerned object of a user in the three-dimensional space, and can interact with the concerned object of the user.

Brief Description of the Drawings

FIG. 1 is a schematic diagram of an augmented reality scene in accordance with an embodiment of the present invention;

FIG. 2 is a schematic diagram of the structure of a computer embodiment in accordance with the present invention;

FIG. 3 is a schematic diagram of the structure of a system embodiment for identifying an object in augmented reality in accordance with the present invention;

FIG. 4 is a schematic diagram of an eye coordinates in accordance with an embodiment of the present invention;

FIG. 5 is a schematic diagram of a spatial model in accordance with an embodiment of the present invention.

Preferred Embodiments of the Invention

Hereinafter, in conjunction with the accompanying drawings, the embodiments of the present invention will be described in detail. It should be noted that, in the case of no conflict, embodiments and features in the embodiments of the present application may be arbitrarily combined with each other.

The embodiment of the present invention detects the position and view direction of a user's eyes through an input device, determines the location of the user's gazing point in space by using the binocular stereo vision effect, and projects a virtual augmented reality image or object to a space at a certain distance from the user; compares coordinates of the gazing point of the eyes with the coordinates of the virtual augmented reality screen or object, controls the mouse or augmented display effect in the virtual space, to realize interaction between the user's virtual world and the real space, or to implement operations on objects in the virtual space by using auxiliary means such as blinking, voice and gestures.

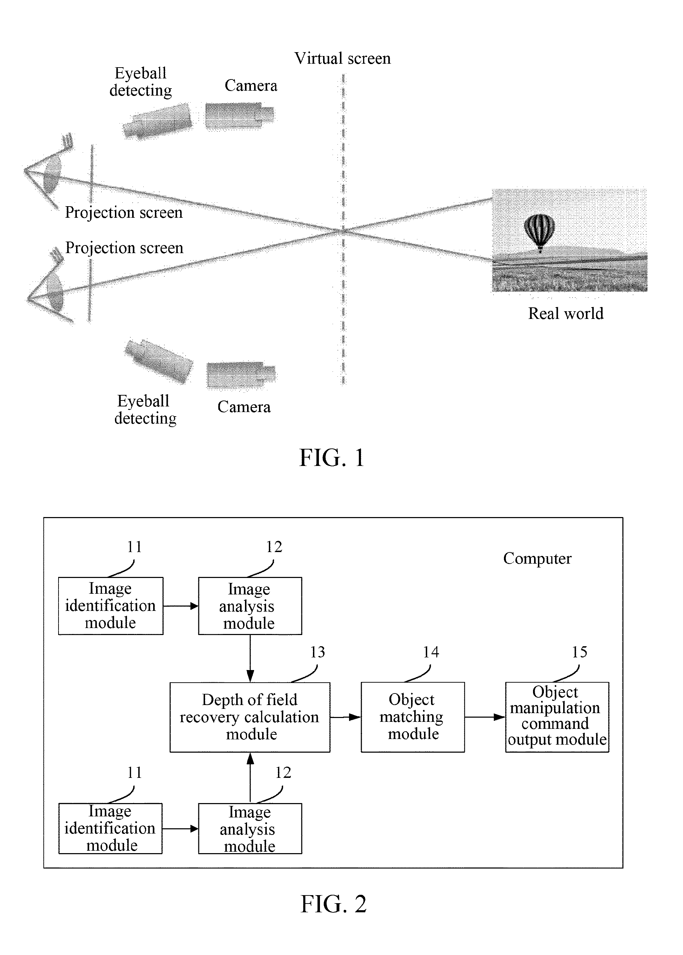

FIG. 1 shows a schematic diagram of an augmented reality scene in accordance with the present invention, wherein, the eye detecting device is used for detecting the eye viewing direction; a projection screen projects various images to the eyes to achieve virtual stereoscopic vision effect of the augmented reality; external cameras which align with the direction of the eyes shoots the outside real world, models an outside world through a computer, and the computer calculates the spatial coordinates of the visual focus of eyes (the user's gazing point); the computer compares the coordinates of the user's gazing point with the coordinates of objects in the virtual world as well as the coordinates of objects in the real world; the eyeball detecting device captures eye actions to implement operations on the object at the gazing point in the virtual world or the real world.

These abovementioned technologies can be used to achieve: actively perceiving the user's spatial gazing point, implementing the interaction with the virtual world through the computer feedback; using the eyes to operate applications or menus on a virtual screen at a certain distance from the user; actively perceiving to obtain man-machine command information to truly achieve what you see is what you get, thus it has broad application scenarios and range.

Corresponding to the abovementioned scenario, the embodiment of the present invention provides a method for identifying an object in augmented reality, and the method is described from the computer side, and the method comprises:

in step one, the computer receives the user's left eye pupil position and right eye pupil position input by the input device, and calculates the spatial coordinates of the visual focus of eyes according to the left eye pupil position and the right eye pupil position;

the input device can be a camera; the step may comprise: the computer obtaining relative coordinates of the left eye pupil and relative coordinates of the right eye pupil in accordance with the left eye pupil position and the right eye pupil position, and calculating the spatial coordinates of the visual focus of eyes according to the relative coordinates of the left eye pupil and the relative coordinates of the right eye pupil;

in step two, the computer receives spatial coordinates of each virtual object input by the input device, compares the spatial coordinates of each virtual object with the spatial coordinates of the visual focus of eyes, and determines a virtual object to be operated by the user.

The input device in the step may be a virtual model system;

Furthermore, after the computer determines the virtual object to be operated by the user, the method further comprises: the computer receiving action information input by the input device such as the eyeball detecting device, and performing corresponding operations on the object to be operated according to the action information and the pre-stored one-to-one mapping relationship between actions and operations; the object to be operated comprises a virtual object to be operated by the user. Of course, a handheld device may also be used to input through keys or the mouse, or a voice inputting method can be used to operate the object to be operated.

Preferably, before the computer performs the corresponding operations on the object to be operated, the method further comprises: the computer receiving parallax images input by the input device such as a camera, modeling the outside space, determining whether there is a real object at the visual focus of eyes, and identifying attributes of the real object; the object to be operated comprises the real object whose attributes are identified.

Corresponding to the abovementioned method embodiment, the embodiment of the present invention further provides a computer, and the computer comprises:

image identification module 11, which is configured to: respectively receive a user's left eye pupil position and right eye pupil position input by an input device, and output the user's left eye pupil position and right eye pupil position to image analysis module 12;

the image analysis module 12, which is configured to: obtain corresponding relative coordinates of the left eye pupil and relative coordinates of the right eye pupil according to the left eye pupil position and the right eye pupil position respectively, and output the relative coordinates of the left eye pupil and relative coordinates of the right eye pupil to depth of field recovery calculation module 13;

the depth of field recovery calculation module 13, which is configured to: calculate spatial coordinates of the visual focus of eyes in accordance with the relative coordinates of the left eye pupil and the relative coordinates of the right eye pupil, and output the spatial coordinates of the visual focus of eyes to object matching module 14; and

the object-matching module 14, which is configured to: receive spatial coordinates of each virtual object input by the input device and compare the spatial coordinates of each virtual object with the spatial coordinates of the visual focus of eyes to determine the virtual object to be operated by the user.

In addition, the computer further comprises: object manipulation command output module 15, configured to: receive action information input by the input device, and output a corresponding manipulation command to the to-be-operated virtual object determined by the object matching module according to the action information and a pre-stored one-to-one mapping relationship between actions and operations.

Preferably, in order to judge whether there is a real object at the visual focus of eyes or not, the depth of field recovery calculation module is further configured to: receive parallax images input by the input device, model an outside world, judge whether there is a real object at the visual focus of eyes or not; the image identification module is further configured to: after the depth of field recovery calculation module determines that there is a real object at the visual focus of eyes, identify attributes of the real object determined by the depth of field recovery calculation module. Thereafter, the object manipulation command output module is further configured to: receive action information input by the input device, and output a corresponding manipulation command to the real object whose attributes are identified by the image identification module according to the action information and the pre-stored one-to-one mapping relationship between actions and operations.

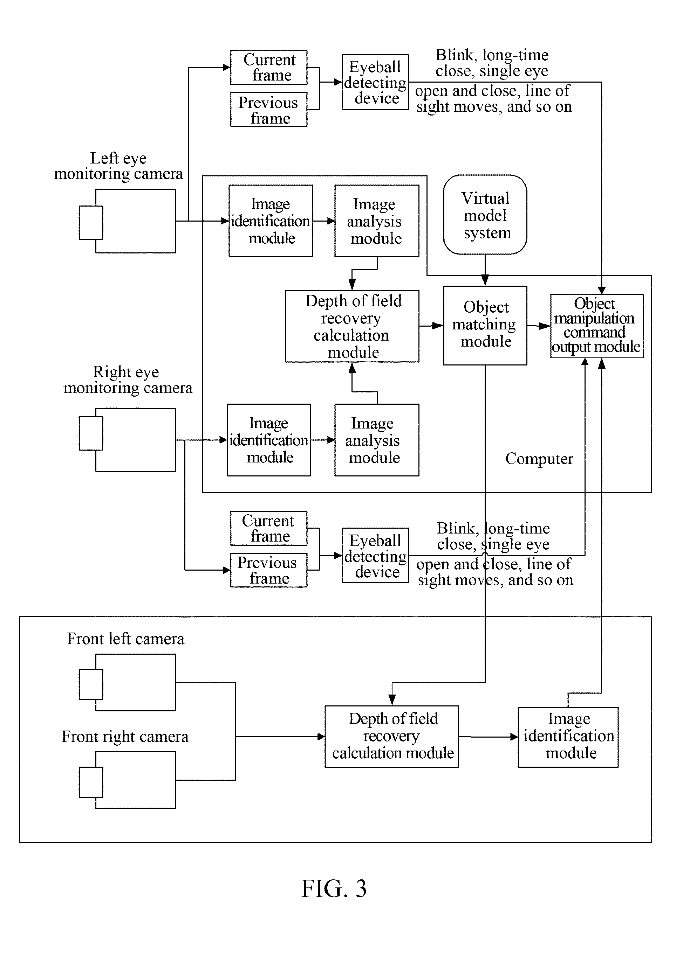

Furthermore, the embodiment of the present invention further provides a system for identifying an object in augmented reality, as shown in FIG. 3, the system comprises a computer and an input device with the structure shown in FIG. 2, the input device is set to: provide input information to the computer, the input information comprises the user's left eye pupil position and right eye pupil position, as well as spatial coordinates of each virtual object.

The abovementioned input information further comprises eye action information and/or parallax images obtained by the input device; or, voice information and/or parallax images provided by the input device; or key information and/or parallax images provided by the input device. Correspondingly, the input device is one or more of the following devices: an eyeball detecting device, a handheld device, a voice inputting device, a camera and a virtual model system.

The working principle of the system is as follows:

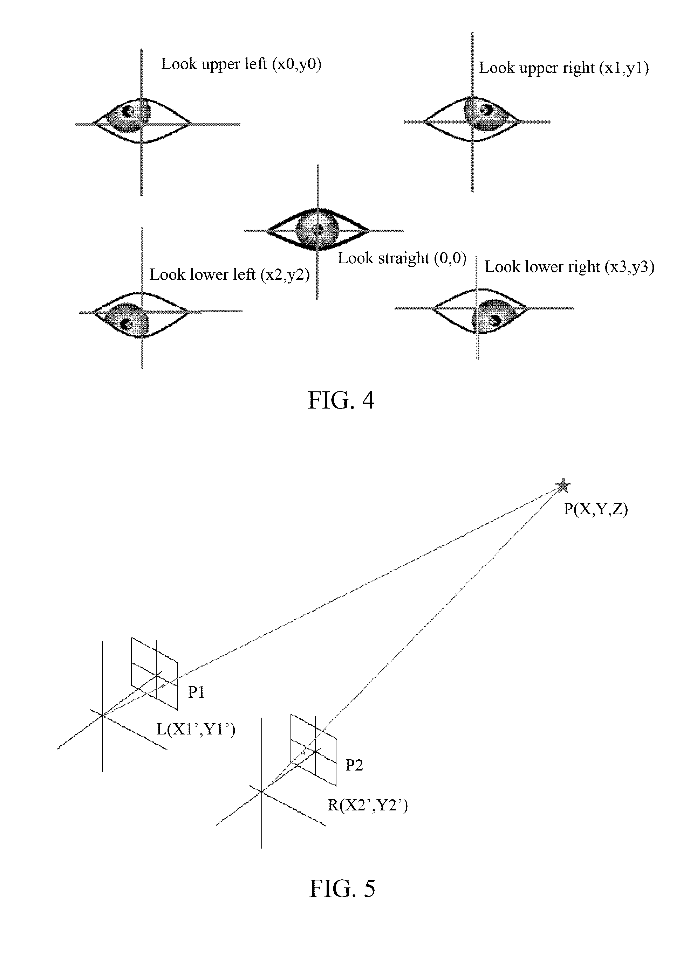

in step 101, system calibration (characteristic point calibration): it is to project a virtual focus object X at a location two meters away from a person in the virtual space, and it is to require the user to gaze at the focus for a few seconds. For the purpose of precisely calculating the pupil positions, virtual focus images can be respectively disposed at the boundary points of the virtual image, and it is to require to repeat the calibration actions: upper left, upper right, lower left and lower right, for four times, as shown in FIG. 4;

of course, before this step, it needs to respectively align two cameras to the user's eyes;

after the calibration, each eye can obtain spatial coordinates of a real object at the four coordination positions are (x0, y0,2), (x1, y1,2), (x2, y2,2), (x3, y3,2), the corresponding left eye pupil coordinates are (x0', y0') (x1', y1') (x2', y2') (x3', y3'), and the corresponding right eye pupil coordinates are (x0", y0") (x1 ", y1") (x2", y2") (x3", y3 ");

in step 102, stereoscopic vision computing: the eyes gaze at an object P in the three-dimensional space, and FIG. 5 is a spatial model:

$$\text{left eye linear equation: } Z = (X)*m + (Y)*n$$

$$\text{right eye linear equation: } Z = (X + a) * m1 + Y*n1$$

a is an interpupillary distance which can be measured, and is usually 55-60mm;

in step 103, the values of m, n, m1 and n1 can be calculated according to the coordinates of the calibration characteristic point and the coordinates of the eyes;

in step 104, the user gazes at the object, the pupil position is measured and the view direction information is calculated; the coordinates of the gazing points X, Y, Z can be obtained by substituting the known m, n, m1 and n1 into the equation and inputting the information of x1, y1, x2, y2;

in step 105, it is to match the coordinates of the gazing points X, Y and Z with the coordinates of the objects within the augmented reality to find a close virtual object;

alternatively, obtaining external parallax images through external camera devices which are in the same direction as the line of sight, modeling an outside world through the computation, and matching the coordinates of the gazing points with the outside world coordinates;

in step 106, if the gazing point matches with a virtual object, it is to control the virtual object through eye action or voice, key operation, and so on;

similarly, if the gazing point matches with a real object, controlling the real object through eye action or voice, key operation, and so on.

The workflow of the abovementioned system is:

in step 201, the left and right eye cameras respectively align to the user's left and right eyes to detect the eye pupil positions, and compare the eye pupil positions with the pupil positions of a calibrated image to obtain relative coordinate values of the pupils;

in step 202, it is to input the coordinate positions of the left and right eye pupils into the depth of field recovery calculation module, and calculate the spatial coordinates (X, Y, Z) of the visual focus of the user;

in step 203, it is to obtain a spatial coordinate position of each virtual object displayed in the three-dimensional augmented reality through the virtual model system, and compare the spatial coordinate position of each virtual object with the coordinates of the visual focus, and if the visual focus is in the vicinity of a certain virtual object (icon, button or menu), it is considered that the user is ready to operate the virtual object;

in step 204, meanwhile the eye detecting device analyzes the difference in the eye images in two adjacent frames to detect the user's eye action, typically such as blinking, long time eye closing, single eye opening and closing, line-of-sight sliding, and so on; the meaning of command corresponding to each action is pre-defined, and the analyzed user action is input to the object manipulation command output module to perform a manipulation action on an object within the line of sight.

Binocular coordination control may comprise a variety of actions, and the various actions and their corresponding commands are as follows:

(1) lines of sight of eyes sliding: change a current input focus;

(2) left eye closing and line of sight of right eye sliding: dragging;

(3) left eye closing and right eye blinking: clicking;

(4) right eye closing and line of sight of the left eye sliding: zooming in or out;

(5) right eye closing and left eye blinking: right-clicking;

(6) eyes blinking rapidly and successively: popping-up a menu;

(7) one eye gazing an object for more than 2 seconds: long-pressing;

(8) eyes gazing at an object for more than 2 seconds: deleting;

(9) eyes closing for more than 2 seconds: closing the menu.

These combined actions can be defined as different operating methods through the custom mapping, and are used for interface operations of the computer device; the abovementioned mapping relationship is only an example and can be set flexibly;

in step 205, alternatively, the front left camera and the front right camera respectively obtain difference images and send the obtained difference images to the depth of field recovery calculation module, meanwhile the depth of field recovery calculation module inputs the coordinates of the visual focus, and the depth of field recovery calculation module judges whether there is a real object at the visual focus or not, if there is a real object, the subsequent image identification module identifies the object attributes, and returns the identified object to the object manipulation command output module to output the object operation command.

The abovementioned front left and front right camera components are optional components, and only the virtual objects can be manipulated if without these components, and with the components, both the virtual objects and the real objects can be coordinately manipulated.

Compared with the prior art, the method and system of the present invention can be used to realize 3D modeling of the gazing point and the depth of field recovery through eyes tracking, and manipulate the augmented reality scene, and can operate not only objects in the specified direction, but also a plurality of virtual objects or real objects in the same direction and at different distances, improve the accuracy of identifying the object to be operated, and allow the user's operations more real in the virtual or real scene.

Those ordinarily skilled in the art can understand that all or some of steps of the abovementioned method may be completed by the programs instructing the relevant hardware, and the abovementioned programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above embodiments are merely provided for describing rather than limiting the technical scheme of the present invention, and the present invention has been described in detail merely with reference to the preferred embodiments. A person ordinarily skilled in the art should understand that the technical scheme of the present invention may be modified or equivalently replaced without departing from the spirit and scope of the technical solution of the present invention, and these modification and equivalent replacements should be covered in the scope of the claims of the present invention.

Industrial Applicability

The embodiment of the present invention achieves a three-dimensional line of sight modeling by detecting positions of the eye pupils, superimposes and matches the three-dimensional line of sight with the three-dimensional space, solves the problem of how to identify a concerned object of a user in the three-dimensional space, and can interact with the concerned object of the user.

**Claims**

1. A method for identifying an object in augmented reality, comprising:

   a computer receiving a left eye pupil position and a right eye pupil position of a user input by an input device, calculating spatial coordinates of a visual focus of eyes according to the left eye pupil position and the right eye pupil position;
   the computer receiving spatial coordinates of each virtual object input by the input device, and comparing the spatial coordinates of each virtual object with the spatial coordinates of the visual focus of eyes to determine a virtual object to be operated by the user.

2. The method of claim 1, wherein,
   after the computer determines the virtual object to be operated by the user, the method further comprises:

   the computer receiving action information input by the input device, and performing an operation corresponding to the action information on an object to be operated according to the action information and a pre-stored one-to-one mapping relationship between actions and operations; wherein the object to be operated comprises a virtual object to be operated by the user.

3. The method of claim 2, wherein,
   the pre-stored one-to-one mapping relationship between actions and operations comprises one or any combination of the following corresponding relationships:

   lines of sight of the eyes sliding corresponds to changing a current input focus;
   the left eye closing and the line of sight of the right eye sliding correspond to a dragging operation;
   the left eye closing and the right eye blinking correspond to a clicking operation;
   the right eye closing and the line of sight of the left eye sliding correspond to a zooming in or out operation;
   the right eye closing and the left eye blinking correspond to a right- clicking operation;
   the eyes blinking rapidly and successively corresponds to an operation of popping-up a menu;
   one eye gazing at an object for more than 2 seconds corresponds to a long-pressing operation;
   the eyes gazing at an object for more than 2 seconds corresponds to a deleting operation; and
   the eyes closing for more than 2 seconds corresponds to an operation of closing the menu.

4. The method of claim 2, wherein,
   before the computer performs the corresponding operation on the object to be operated, the method further comprises:

   the computer receiving parallax images input by the input device, modeling an outside world, determining there is a real object at the visual focus of eyes, identifying attributes of the real object; wherein the object to be operated comprises the real object whose attributes are identified out.

5. The method of any one of claims 1-4, wherein,
   the input device is one or more of the following devices: an eyeball detecting device, a handheld device, a voice inputting device, a camera and a virtual model system.

6. The method of claim 1, wherein,
   the computer calculating the spatial coordinates of the visual focus of eyes according to the left eye pupil position and the right eye pupil position, comprises:

   the computer obtaining relative coordinates of the left eye pupil and relative coordinates of the right eye pupil according to the left eye pupil position and the right eye pupil position, and calculating the spatial coordinates of the visual focus of eyes according to the relative coordinates of the left eye pupil and the relative coordinates of the right eye pupil.

7. A computer, applied to augmented reality, comprising an image identification module, an image analysis module, a depth of field recovery calculation module and an object matching module, wherein:

the image identification module is configured to: respectively receive a left eye pupil position and a right eye pupil position input of a user by an input device, and output the left eye pupil position and the right eye pupil position of the user to the image analysis module;
the image analysis module is configured to: respectively obtain corresponding relative coordinates of the left eye pupil and relative coordinates of the right eye pupil according to the left eye pupil position and the right eye pupil position, and output the relative coordinates of the left eye pupil and relative coordinates of the right eye pupil to the depth of field recovery calculation module;
the depth of field recovery calculation module is configured to: calculate spatial coordinates of a visual focus of eyes in accordance with the relative coordinates of the left eye pupil and the relative coordinates of the right eye pupil, and output the spatial coordinates of the visual focus of eyes to the object matching module; and
the object-matching module is configured to: receive spatial coordinates of each virtual object input by the input device and compare the spatial coordinates of each virtual object with the spatial coordinates of the visual focus of eyes to determine a virtual object to be operated by the user.

8. The computer of claim 7, wherein, the computer further comprises:

an object manipulation command output module, configured to: receive action information input by the input device, output a corresponding manipulation command to the virtual object to be operated determined by the object matching module according to the action information and a pre-stored one-to-one mapping relationship between actions and operations.

9. The computer of claim 8, wherein,
the pre-stored one-to-one mapping relationship between actions and operations comprises one or any combination of the following corresponding relationships:

lines of sight of the eyes sliding corresponds to changing a current input focus;
the left eye closing and the line of sight of the right eye sliding correspond to a dragging operation;
the left eye closing and the right eye blinking correspond to a clicking operation;
the right eye closing and the line of sight of the left eye sliding correspond to a zooming in or out operation;
the right eye closing and the left eye blinking correspond to a right-clicking operation;
the eyes blinking rapidly and successively corresponds to an operation of popping-up a menu;
one eye gazing at an object for more than 2 seconds corresponds to a long-pressing operation;
the eyes gazing at an object for more than 2 seconds corresponds to a deleting operation; and
the eyes closing for more than 2 seconds corresponds to an operation of closing the menu.

10. The computer of any one of claims 7-9, wherein,
the depth of field recovery calculation module is further configured to: receive parallax images input by the input device, model an outside world, and judge whether there is a real object at the visual focus of eyes;
the image identification module is further configured to: after the depth of field recovery calculation module determines that there is a real object at the visual focus of eyes, identify attributes of the real object determined by the depth of field recovery calculation module.

11. The computer of claim 10, wherein,
the object manipulation command output module is further configured to: receive action information input by the input device, and output a corresponding manipulation command to the real object whose attributes are identified out by the image identification module according to the action information and the pre-stored one-to-one mapping relationship between actions and operations.

12. A system for identifying an object in augmented reality, comprising an input device and a computer, wherein:

the input device is configured to: provide input information to the computer, the input information comprises a left eye pupil position and a right eye pupil position of a user, as well as spatial coordinates of each virtual object; the computer is the computer of any one of claims 7-11.

13. The system of claim 12, wherein,
the input information further comprises eye action information and/or parallax images obtained by the input device; or voice information and/or parallax images provided by the input device; or, key information and/or parallax images provided by the input device.

14. The system of claim 12 or 13, wherein,
the input device is one or more of the following devices: an eyeball detecting device, a handheld device, a voice inputting device, a camera and a virtual model system.

FIG. 1

FIG. 2

FIG. 3

Look upper left (x0,y0)

Look upper right (x1,y1)

Look lower left (x2,y2)

Look straight (0,0)

Look lower right (x3,y3)

FIG. 4

P(X,Y,Z)

P1

L(X1',Y1')

P2

R(X2',Y2')

FIG. 5

# INTERNATIONAL SEARCH REPORT

| International application No. |
| --- |
| **PCT/CN2013/080661** |

## A. CLASSIFICATION OF SUBJECT MATTER

G06F 3/01 (2006.01) i

According to International Patent Classification (IPC) or to both national classification and IPC

## B. FIELDS SEARCHED

Minimum documentation searched (classification system followed by classification symbols)

IPC: G06F 3/-

Documentation searched other than minimum documentation to the extent that such documents are included in the fields searched

Electronic data base consulted during the international search (name of data base and, where practicable, search terms used)

WPI, EPODOC, CNKI, CPRS: virtual reality, augmented reality, eye, pupil, sight, focus, identify, recognize, object, widget, icon, three dimension, solid, space, VR, AR

## C. DOCUMENTS CONSIDERED TO BE RELEVANT

| Category* | Citation of document, with indication, where appropriate, of the relevant passages | Relevant to claim No. |
| --- | --- | --- |
| Y | CN 1694045 A (BEIJING VIMICRO CORP.), 09 November 2005 (09.11.2005), claims 1, 8, 12 and 19, and description, page 7, paragraph 1 and page 3, line 20-25 | 1-14 |
| Y | CN 102749991 A (GUANGDONG BAITAI TECHNOLOGY CO., LTD.), 24 October 2012 (24.10.2012), description, paragraphs 0029, 0047 and 0086-0087 | 1-14 |
| A | CN 101441513 A (UNIVERSITY OF SCIENCE & TECHNOLOGY BEIJING), 27 May 2009 (27.05.2009), the whole document | 1-14 |
| P, X | CN 102981616 A (ZTE CORP.), 20 March 2013 (20.03.2013), claims 1-14 | 1-14 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 October 2013 (18.10.2013) | **31 October 2013 (31.10.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Qingquan** Telephone No.: (86-10) **62411700** |

Form PCT/ISA/210 (second sheet) (July 2009)

## INTERNATIONAL SEARCH REPORT
### Information on patent family members

| International application No. |
| --- |
| **PCT/CN2013/080661** |

| Patent Documents referred in the Report | Publication Date | Patent Family | Publication Date |
| --- | --- | --- | --- |
| CN 1694045 A | 09.11.2005 | CN 1293446 C | 03.01.2007 |
| | | US 2006281969 A1 | 14.12.2006 |
| | | US 7853050 B2 | 14.12.2010 |
| CN 102749991 A | 24.10.2012 | None | |
| CN 101441513 A | 27.05.2009 | CN 101441513 B | 11.08.2010 |
| CN 102981616 A | 20.03.2013 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMESH JAIN ; RANGACHAR KASTURI ; BRAIN G SCHUNCK.** Machine Version. McGraw Hill, 1995